# EUROPÄISCHE PATENTSCHRIFT

(11) **EP 2 926 084 B1**
(45) Veröffentlichungstag und Bekanntmachung des Hinweises auf die Patenterteilung: **09.01.2019**
(21) Anmeldenummer: 13824301.9
(22) Anmeldetag: 26.11.2013
(51) Int. Cl.: G01B 5/25, G01B 7/31, G01B 11/27

(54) **KUPPLUNGSVORRICHTUNG ZUM VERBINDEN EINER ERSTEN WELLE MIT EINER ZWEITEN WELLE**
COUPLING DEVICE FOR CONNECTING A FIRST SHAFT WITH A SECOND SHAFT
DISPOSITIF D'ACCOUPLEMENT POUR CONNECTER UN PREMIER AXE AVEC UN DEUXIÈME AXE

(30) Priorität: 28.11.2012 DE 102012023201
(43) Veröffentlichungstag der Anmeldung: 07.10.2015
(73) Patentinhaber: PRÜFTECHNIK Dieter Busch AG, 85737 Ismaning (DE)
(72) Erfinder: LYSEN, Heinrich, 85748 Garching (DE); HÖLZL, Roland, 81369 München (DE)
(86) Internationale Anmeldenummer: PCT/DE2013/200318
(87) Internationale Veröffentlichungsnummer: WO 2014/082637

(56) Entgegenhaltungen:
- WO-A2-2012/002901
- DE-A1- 2 755 069
- US-A- 4 428 126
- US-A- 4 534 114
- US-A- 4 928 401

## Beschreibung

Die vorliegende Erfindung betrifft eine Kupplungsvorrichtung zum Verbinden einer ersten Welle mit einer zweiten Welle, die zwei miteinander in Eingriff stehende Flansche aufweist.

Um einen den Verschleiß der Wellenlager und der Kupplung gering zu halten, sollten die Wellen möglichst genau fluchtend zueinander ausgerichtet sein. Zur Ermittlung der Fehlausrichtung von Wellen sind eine Vielzahl unterschiedlicher Verfahren bekannt, wobei typischerweise an einer Umfangsfläche einer jeden Welle eine Messeinheit angesetzt wird, und wobei mindestens eine der beiden Messeinheiten zum Erzeugen eines Lichtstrahlbündels und mindestens eine der beiden Messeinheiten zum Erfassen der Auftreffposition des Lichtstrahlbündels auf einer Detektionsfläche ausgebildet ist. Eine Übersicht über solche optische Verfahren ist beispielsweise in der US 6,434,849 B1 zu finden.

Die US 4,928,401 betrifft eine Kupplungsvorrichtung zum Verbinden einer ersten Welle mit einer zweiten Welle, die zwei miteinander in Eingriff stehende Flansche aufweist, gemäß dem Oberbegriff von Anspruch 1, wobei die Flansche Skalen aufweisen, auf denen sich der Grad einer Fehlausrichtung der Wellen ablesen lässt.

Es ist Aufgabe der vorliegenden Erfindung, eine Kupplungsvorrichtung für zwei Wellen zu schaffen, bei welcher eine unzulässige Fehlausrichtung der Wellen auf möglichst einfache Weise erkannt werden kann. Es ist ferner Aufgabe der vorliegenden Erfindung, ein möglichst einfaches Verfahren zum Bestimmen der Fehlausrichtung von mittels einer solchen Kupplungsvorrichtung gekuppelten Wellen zu schaffen.

Erfindungsgemäß wird diese Aufgabe gelöst durch eine Kupplungsvorrichtung gemäß Anspruch 1, 3 bzw. 7.

Bei der Lösung gemäß Anspruch 1 ist vorteilhaft, dass dadurch, dass zwei miteinander in Eingriff stehende Flansche der Kupplungsvorrichtung mit Mitteln versehen bzw. ausgebildet sind, um ihre axiale und/oder radiale relative Verstellung aufgrund einer Fehlausrichtung der Wellen optisch beobachtbar zu machen, eine Fehlausrichtung auf besonders einfache Weise bei geringem konstruktiven Aufwand erkennbar wird. Dabei sind die Flansche in einer Weise glockenförmig ausgebildet, dass ihre Endbereiche in axialer Richtung mindestens zum Teil überlappen, und sind mit Markierungselementen versehen, um ihre Position zueinander optisch kenntlich zu machen.

Gemäß der Lösung gemäß Anspruch 3 sind die Flansche in einer Weise glockenförmig ausgebildet sind, dass ein umlaufender axialer Spalt zwischen den Flanschen gebildet wird, wobei im Bereich des Spalts ein umlaufender Ring an den Rändern der den Spalt bildenden Flansche angebracht ist, der so ausgebildet, dass sich sein Zustand und/oder seine relative Position bzgl. der Flansche aufgrund der Beanspruchung bei sich bei der Drehung der Wellen aus einer unzulässigen Fehlausrichtung der Wellen ergebender Relativbewegung der den Spalt bildenden Flansche in optisch beobachtbarer Weise verändert.

Dabei kann der Ring bzgl. der Flansche aufgrund einer Fehlausrichtung der Wellen axial verschiebbar und verkippbar sein und die Flansche und der Ring können mit Markierungselementen versehen sein, um die Position des Rings optisch kenntlich zu machen.

Bei der Lösung gemäß Anspruch 7 ist vorteilhaft, dass durch das Versehen mindestens eines der Flansche oder eines mit den zwei Flanschen in Eingriff stehenden Elements mit mindestens einem Wandler zum Erzeugen eines elektrischen Signals oder eines akustischen Signals aus mechanischer Bewegung die bei einer Fehlausrichtung bei Drehung der Wellen auftretende periodische Bewegung von miteinander in Eingriff stehenden Flanschen relativ zueinander direkt und auf einfache Weise in ein elektrisches Signal umgesetzt werden kann, um beispielsweise daraus die Fehlausrichtung der Wellen zu ermitteln, bzw. in eine akustische Warnung umgesetzt werden kann, um auf eine Fehlausrichtung hinzuweisen.

Das auf diese Weise erzeugte elektrische Signal kann nicht nur zur Auswertung verwendet werden, sondern es kann auch als Energiequelle für an bzw. in den Kupplungsflanschen vorgesehene elektrische Einrichtungen verwendet werden, beispielsweise für eine Telemetrieeinrichtung, welche die Wandlersignale oder aus den Wandlersignalen abgeleitete Signale drahtlos an eine stationäre Einheit, beispielsweise eine Auswerteeinheit, übermittelt. Alternativ oder zusätzlich kann das Wandlersignal einem Lautsprecher zugeführt werden, um ein Schallsignal entsprechend der Fehlausrichtung der Welle zu erzeugen.

Gemäß einer Ausführungsform sind die Schallerzeugungsmittel durch eine glockenförmige Ausbildung des entsprechenden Flansches realisiert, wobei das Anregungselement ausgebildet ist, um den glockenförmigen Flansch durch periodische Berührung zur akustischen Schwingung anzuregen, wenn die sich aus einer Fehlausrichtung der Wellen ergebende axiale und/oder radiale Relativbewegung der entsprechenden Flansche zueinander einen bestimmten Wert überschreitet. Gemäß einer alternativen Ausführungsform können die Schallerzeugungsmittel eine durch axiale Bewegung des Anregungselements betätigbare Pumpe sowie einen Luftschwingungserzeuger aufweisen, um eine axiale Bewegung des Anregungselements relativ zu dem Schallerzeugungsmittel in einen Luftstrom umzusetzen, der mittels des Luftschwingungserzeugers in selbsterregte Schwingung versetzt wird, um ein entsprechendes Schallsignal zu erzeugen. Gemäß einer Variante kann das Schallerzeugungsmittel ein Schwingungselement aufweisen, welches durch axiale Bewegung des Anregungselements zu Schwingungen anregbar ist, um ein entsprechendes Schallsignal zu erzeugen.

Weitere bevorzugte Ausgestaltungen der Erfindung ergeben sich aus den Unteransprüchen.

Im Folgenden wird die Erfindung anhand der beigefügten Zeichnungen beispielhaft näher erläutert. Dabei zeigen:
Fig. 1 eine Längsschnittansicht eines ersten Beispiels einer erfindungsgemäßen Kupplungsvorrichtung;
Fig. 2 eine Seitenansicht der Kupplungsvorrichtung von Fig. 1;
Fign. 3 und 4 Ansichten wie Fig. 1 bzw. Fig. 2, wobei andere Beispiele der Erfindung dargestellt ist;
Fig. 5 eine Ansicht wie Fig. 3, wobei ein alternatives Beispiel der Erfindung dargestellt ist;
Fig. 6 eine Ansicht wie Fig. 5, wobei ein weiteres alternatives Beispiel der Erfindung dargestellt ist;
Fig. 7A, 7B eine Frontalansicht eines Beispiels einer erfindungsgemäßen Kupplungsmembran bzw. eine Ansicht in der radialen Richtung A von Fig. 7A;
Fig. 8 eine teilweise aufgebrochene Seitenansicht eines weiteren Beispiels einer erfindungsgemäßen Kupplungsvorrichtung;
Fig. 9 eine Seitenansicht eines weiteren alternativen Beispiels einer erfindungsgemäßen Kupplungsvorrichtung; und
Fig. 10 eine Seitenansicht eines weiteren alternativen Beispiels einer erfindungsgemäßen Kupplungsvorrichtung.

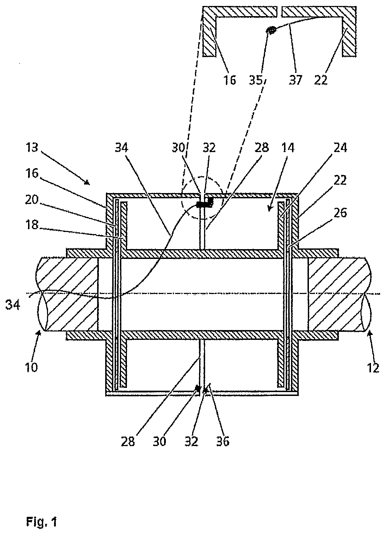

In Fig. 1 ist eine Längsschnittansicht eines ersten Beispiels einer erfindungsgemäßen Kupplungsvorrichtung 13 zum Kuppeln einer ersten Welle 10 und einer zweite Welle 12, die mit einen ersten Kupplungsflansch 16 zur Befestigung an der ersten Welle 10, einen zweiten Kupplungsflansch 22 zur Befestigung an der zweiten Welle 12 sowie ein Zwischenstück 14 mit einem ersten Zwischenstückflansch 18 zum Eingriff mit dem ersten Kupplungsflansch 18 und einen zweiten Zwischenstückflansch 24 zum Eingriff mit dem zweiten Kupplungsflansch 22 aufweist.

Der Eingriff zwischen den jeweiligen Flanschen 16 und 18 bzw. 22 und 24 erfolgt über einen Reibschluss mittels einer Kupplungsscheibe (Kupplungsmembran) 20 bzw. 26.

Die beiden Kupplungsflansche 16, 22 sind glockenförmig ausgebildet und umschließen das Zwischenstück 14 mindestens zum Teil so, dass sich ein umlaufender axialer Spalt 28 zwischen den beiden Flanschen 16, 22 ergibt. Der Spalt 28 spiegelt dabei den axialen Abstand der beiden Endkanten 30 der Flansche 16 bzw. 22 wieder.

Die Flansche 16 und 22 umschließen das jeweilige Ende der Welle 10 bzw. 12.

Aufgrund der festen Verbindung der Flansche 16, 22 mit den Wellen 10, 12 bildet der Spalt 28 eine Fehlausrichtung der beiden Wellen 10, 12 zueinander entsprechend ab. Dies kann gemäß einer ersten Ausführungsform der Erfindung ausgenutzt werden, um durch visuelle Vermessung des Spalts 28 aus mindestens zwei unterschiedlichen radialen Richtungen die Fehlausrichtung der beiden Wellen 10, 12 zueinander zu ermitteln. Vorzugsweise bilden die beiden radialen Richtungen einen Winkel von etwa 90° zueinander, wobei es sich vorzugsweise um eine vertikale Richtung und eine horizontale Richtung handelt. Die Vermessung des Spalts 28 kann dabei grundsätzlich durch Inaugenscheinnahme erfolgen oder durch das Aufnehmen von entsprechenden Fotos mittels einer Kamera (in Fig. 1 nicht gezeigt). Bei der Kamera kann es sich beispielsweise auch um ein Smartphone handeln. Der Spalt 28 kann anhand der aus unterschiedlichen radialen Richtungen aufgenommenen Bilder vermessen werden, wobei die Bildauswertung vorzugsweise mittels geeigneter Software automatisch erfolgt.

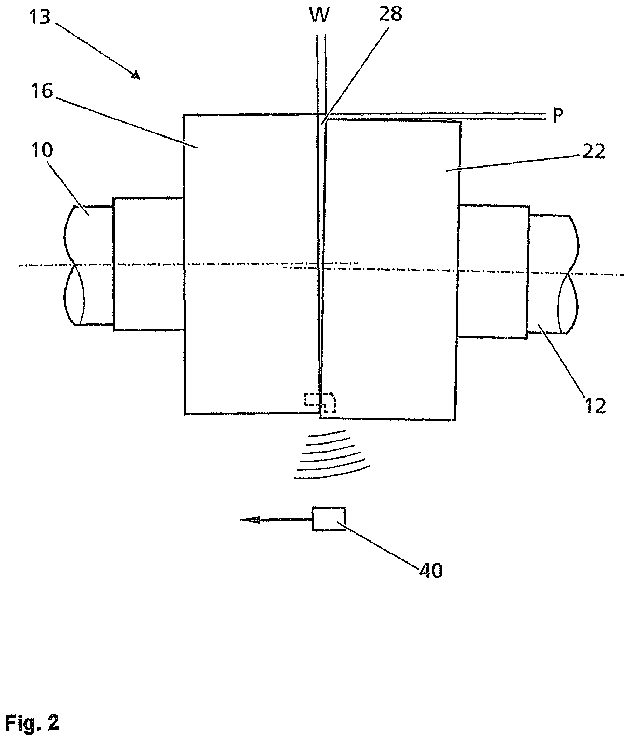

In Fig. 2 ist eine Seitenansicht der Vorrichtung von Fig. 1 gezeigt, woraus ersichtlich ist, dass sich die Komponenten des Parallelversatzes der Wellen 10, 12 aus dem radialen Versatz der tangentialen Flächen der Flansche 16, 22 an den beiden gegenüberliegenden Enden des Spalts in der entsprechenden Bildansicht (in Fig. 2 mit "P" angedeutet) ergeben. Dabei ergibt sich beispielsweise aus der Ansicht aus horizontaler Richtung die vertikale Komponente des Parallelversatzes, und aus der vertikalen Ansicht ergibt sich die horizontale Komponente des Parallelversatzes.

Die entsprechenden Komponenten des Winkelversatzes der Wellen 10, 12 können aus dem Verlauf der Breite des Spalts 28 entlang des Spalts 28 ermittelt werden. In Fig. 2 ist ein Beispiel dargestellt, wo lediglich ein vertikaler Winkelversatz "W" vorliegt, jedoch kein horizontaler Winkelversatz, so dass sich aus der horizontalen Ansicht die vertikale Komponente W des Winkelversatzes als Differenz der Spaltbreite an den beiden gegenüber liegenden Enden des Spalts 28 ergibt. Wenn sowohl ein vertikaler Winkelversatz als auch ein horizontaler Winkelversatz vorliegen, müssen beide Ansichten ausgewertet werden.

Grundsätzlich kann die beschriebene visuelle Vermessung des Spalts 28 sowohl bei Stillstand der Wellen 10, 12 oder auch bei sich drehenden Wellen 10, 12 erfolgen.

Vorzugsweise sind die Flansche 16, 22 so ausgebildet, dass die sich ergebende Breite des Spalts 28 bei ideal ausgerichteten Wellen nicht größer als das Dreifache der Änderung der Spaltbreite bei der maximal zulässigen Fehlausrichtung der Wellen 10, 12 im Vergleich zu ideal ausgerichteten Wellen 10, 12 beträgt (in Fig. 1 sind ideal ausgerichtete Wellen gezeigt, während die Wellen in Fig. 2 sowohl mit Parallelversatz P als auch mit vertikalem Winkelversatz W zueinander angeordnet sind).

Um eine gute visuelle Beuteilung des Spalts 28 zu ermöglichen, sollte die Fase der den Spalt begrenzenden Kanten 30, 32 kleiner als die zulässige Fehlausrichtung der Wellen 10, 12 sein.

Ferner sollte die Breite des Spalts 28 das zulässige Axialspiel der Kupplungsvorrichtung 13 nicht übersteigen.

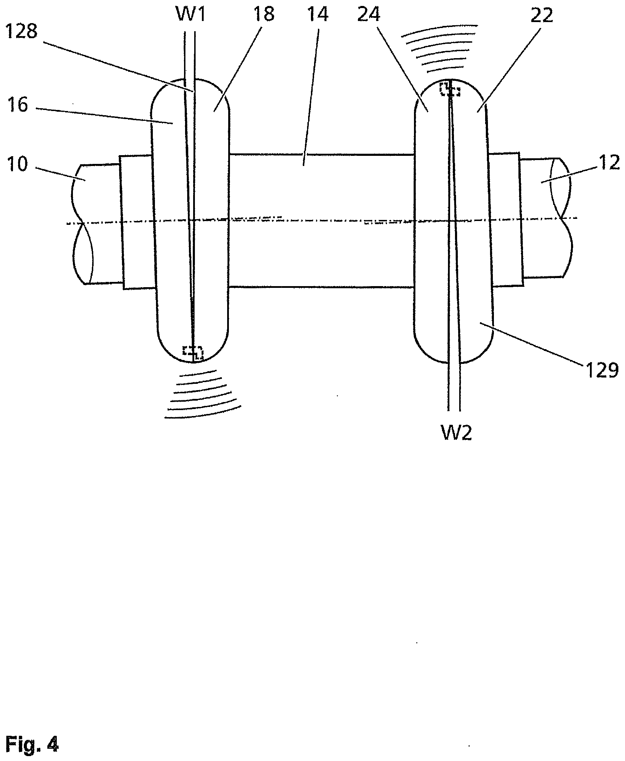

Eine Abwandlung des anhand von Fig. 2 veranschaulichten Prinzips der visuellen Ermittlung der Fehlausrichtung ist in Fig. 4 gezeigt, wo nicht nur die beiden Kupplungsflansche 16, 22 der Wellen 10, 12 sondern auch die Zwischenstückflansche 18, 24 glockenförmig ausgebildet sind, wobei in diesem Fall zwei umlaufende axiale Spalte gebildet werden, nämlich ein erster Spalt 128 zwischen den beiden miteinander in Eingriff stehenden Flanschen 16 und 18 sowie einen Spalt 129 zwischen den miteinander in Eingriff stehenden Flanschen 22 und 24. Auch hier werden die beiden Spalte 128, 129 aus mindestens zwei unterschiedlichen radialen Richtungen wie in Beispiel in Fig. 2 betrachtet. Im Gegensatz zum Beispiel von Fig. 2 können dabei beide Spalte 128, 129 herangezogen werden, wobei diese sich spiegelbildlich verhalten, d.h. während beispielsweise bei dem Spalt 128 sich die Breite am oberen Ende in Fig. 4 gesehen aufgrund des Winkelversatzes vergrößert und am unteren Ende verringert, ist dies bei dem Spalt 129 genau umgekehrt.

Für die beschriebenen visuellen Vermessungsverfahren ist es besonders vorteilhaft, wenn der jeweilige Spalt möglich komplett umlaufend ausgebildet ist, das heißt die entsprechenden glockenförmigen Flansche möglichst vollständig umlaufen.

Die bisher in Bezug auf Fign. 2 und 4 beschriebene glockenförmige Ausbildung von Flanschen kann jedoch nicht nur zu einer visuellen Vermessung, sondern auch zu einer akustischen Anzeige einer Fehlausrichtung verwendet werden. Im Beispiel von Fig. 2 ist dabei mindestens einer der beiden Flansche 16, 22 in einer Weise ausgebildet, dass er zur Schallerzeugung mittels periodischer mechanischer Anregung in der Nähe der Endkante 30 bzw. 32 ausgebildet ist. Für die Schallerzeugung ist dabei eine glockenförmige Ausbildung des anderen Flanschs 22 bzw. 16 nicht erforderlich.

In dem in Fign. 1 und 2 gezeigten Beispiel ist der Flansch 22 mit Anregungselementen 34, 36 versehen, die ausgebildet sind, um den glockenförmigen Flansch 16 durch periodische Berührung zu akustischen Schwingungen anzuregen, wenn die sich bei der Drehung der Wellen 10, 12 aus einer Fehlausrichtung der Wellen ergebende axiale und/oder radiale Relativbewegung der Flansche 16, 22 zueinander einen bestimmten Wert überschreitet. Dieses Prinzip der akustischen Anregung beruht darauf, dass sich bei einem Umlauf der Wellen 10, 12 an jeder Stelle des Spalts die Breite zwischen dem Minimalwert und dem Maximalwert verändert und auch der radiale Versatz den vollen Hub zwischen dem Maximum die eine Richtung und dem Maximum der anderen Richtung durchläuft.

Dabei ist es zweckmäßig, für den Winkelversatz und für den Parallelversatz ein separates Anregungselement 34, 36 vorzusehen. Im Beispiel von Fig. 1 ist das Anregungselement 34 für eine Anregung basierend auf dem Parallelversatz ausgebildet, während das Anregungselement 36 für eine Anregung basierend auf dem Winkelversatz ausgebildet ist. Dabei ist das Anregungselement 34 ausgebildet, um die sich bei drehenden Wellen 10, 12 ergebende radiale Relativbewegung bezüglich des Flanschs 16 in eine periodische Berührung des Flanschs 16 im Bereich seiner Endkante 30 umzusetzen, und das Anregungselement 36 ist ausgebildet, um die sich bei drehenden Wellen 10, 12 ergebende axiale Relativbewegung des Anregungselements 36 bezüglich des Flanschs 16 in eine periodische Berührung des Flanschs 16 im Bereich seiner Endkante 30 in radialer Richtung umzusetzen. Die jeweilige radiale bzw. axiale Relativbewegung ergibt sich dabei aus dem Parallelversatz bzw. Winkelversatz der beiden Wellen 10, 12.

Beispielsweise kann das "radiale" Anregungselement 34 als den Flansch 16 untergreifenden Klöppel 35 ausgebildet sein. Der Klöppel 35 kann dabei beispielsweise an einer sich im Wesentlichen in axialer Richtung erstreckenden Feder 37 mit einer nicht-linearen Charakteristik befestigt sein. Der sich ergebende Abstand des Klöppels 35 in radialer Richtung von der Innenwand des Flanschs 16 liegt dabei fest, ab welchem Parallelversatz der Klöppel 35 den Flansch 16 während einer Umdrehung der Wellen 10, 12 einmal berührt. Dabei wird dieser radiale Abstand durch die entsprechende Ausbildung des Anregungselements 34, das heißt in dem gezeigten Beispiel durch die Geometrie der Feder 37, entsprechend der zulässigen maximalen Fehlausrichtung hinsichtlich des Parallelversatzes festgelegt. Eine solche Anordnung erzeugt dann bei Überschreiten des zulässigen Parallelversatzes einen akustischen Alarm entsprechend der periodischen Anregung der Glocke des Flanschs 16, der von im Bereich der Wellen 10, 12 befindlichen Personen wahrgenommen werden kann.

Entsprechende Überlegungen gelten hinsichtlich des für die Winkelversatzes vorgesehenen Anregungselements 36, wobei hier der axiale Abstand des Anregungselements 36 von einem an der Endkante 30 des Flanschs 16 vorgesehenen Gegenstücks festgelegt wird. Das heißt, das Anregungselement 36 wird geometrisch so ausgebildet, dass es erst bei Überschreitung des zulässigen Winkelversatzes das Gegenstück am Flansch 16 während einer Umdrehung der Wellen 10, 12 einmal erreicht. Das Anregungselement 36 erzeugt auf diese Weise durch entsprechende Anregung der Glocke des Flanschs 16 also einen akustischen Alarm, sobald der zulässige Winkelversatz überschritten wird.

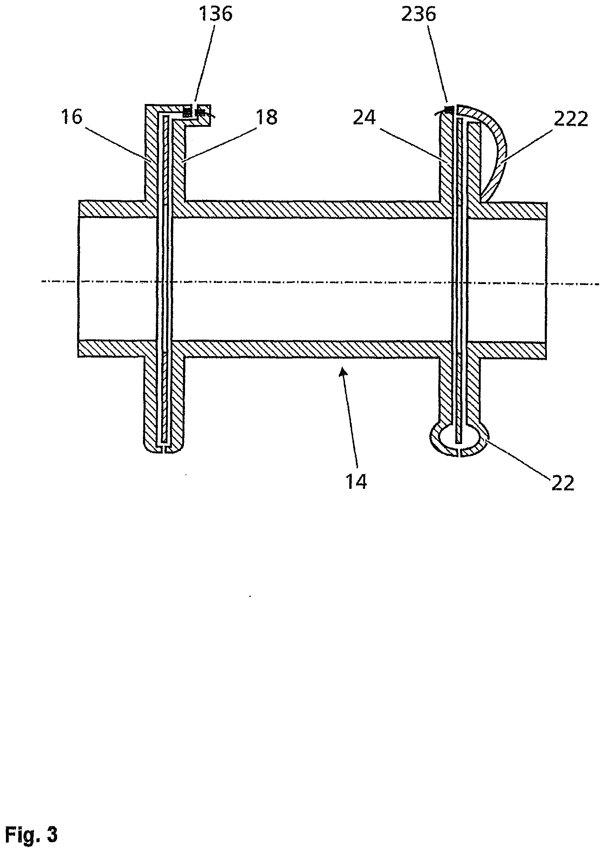

Analoge Überlegungen gelten auch für die Ausführungsformen gemäß Fign. 3 und 4, wo mindestens einer der Flansche in einer Weise glockenförmig ausgebildet sein sollte, dass er durch ein entsprechendes Anregungselement des mit dem glockenförmigen Flansch in Eingriff stehenden Flanschs periodisch angeregt wird, sobald der Winkelversatz und/oder Parallelversatz einen bestimmten zulässigen Wert überschreitet.

Dabei können die Flansche so ausgebildet sein, dass nur im Bereich eines der beiden Spalte 128, 129 ein akustisches Alarmsignal erzeugt wird, oder es kann im Bereich beider Spalte ein akustisches Warnsignal erzeugt werden.

In Fig. 3 sind einige Beispiele für glockenförmige Ausbildungen der Flansche sowie für entsprechende Anregungselemente gezeigt. Beispielsweise ist gemäß Fig. 3 der erste Kupplungsflansch 16 glockenförmig ausgebildet und wird mittels eines Anregungselements 136 des ersten Flanschs 18 der Zwischenstücks 14 in axialer Richtung zum Schwingen angeregt, sobald der Winkelversatz den zulässigen Wert überschreitet. Bei 236 ist ein Anregungselement des zweiten Zwischenstückflanschs 24 gezeigt, welches eine glockenförmige Struktur 222 des zweiten Kupplungsflanschs 22 in axialer Richtung anregt.

Grundsätzlich können auch beide akustisch zusammenwirkenden Flansche glockenförmig ausgebildet sein, das heißt auch der Flansch mit dem Anregungselement kann glockenförmig ausgebildet sein, um selbst in Schwingung versetzt zu werden und ein Schallsignal abzugeben. Hierbei können die Frequenzen der beiden Glocken dann beispielsweise disharmonisch gewählt werden, so dass das Verhältnis der Frequenzen beispielsweise zwischen 0,93 und 0,96 liegt.

Ferner können mehrere in Umfangsrichtung verteilte Anregungselemente vorgesehen sein, wobei diese dann unregelmäßig über die Umfangsrichtung sein können, das heißt die Abstände in Umfangsrichtung sind nicht regulär.

Um eine akustische Fernüberwachung der Wellen 10, 12 zu ermöglichen, kann in der Nähe der Kupplungsvorrichtung 13 ein Luftschallmikrofon 40 (s. Fig. 2) angeordnet sein, um die akustischen Alarmsignale aufzufangen und an eine entfernt von der Kupplungsvorrichtung 13 befindliche Person elektronisch weiterzugeben.

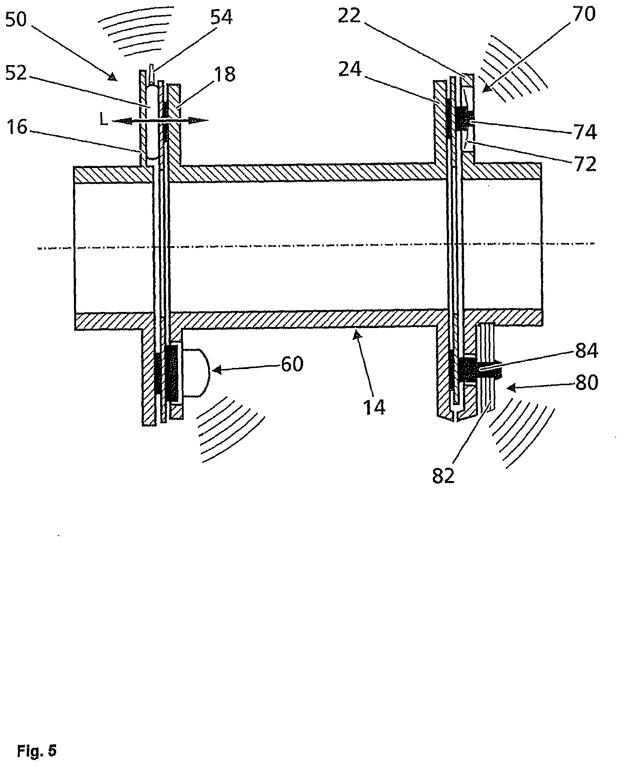

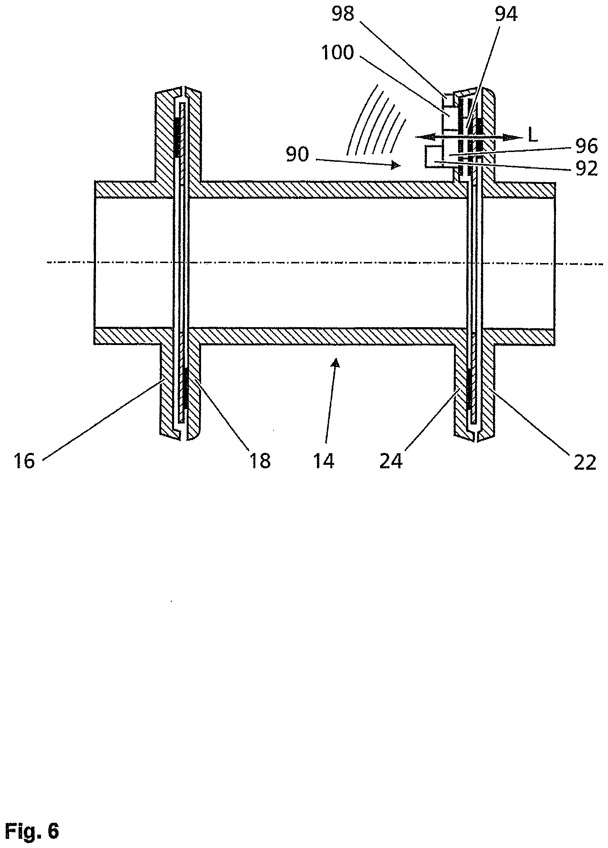

In den Fign. 5 und 6 sind Varianten für die Erzeugung eines akustischen Fehlausrichtungsalarms gezeigt, bei welchen keine glockenförmige Ausbildung eines Flanschs erforderlich ist. Stattdessen ist mindestens einer der Flansche mit einem Schallerzeugungsmittel versehen, welches mittels eines Anregungselements an dem mit dem mit dem Schallerzeugungsmittel versehenen Flansch in Eingriff stehenden Flansch periodisch axial und/oder radial betätigt wird, zumindest wenn die Fehlausrichtung der beiden Wellen einen bestimmten Wert überschreitet, wobei die Schallerzeugungsmittel in den gezeigten Beispielen für die Erzeugung eines Luftstroms oder für die Erzeugung von Schwingungen eines schwingungsfähigen Elements ausgebildet sind.

Bei den in den Fign. 5 und 6 gezeigten Beispielen wird jeweils lediglich die sich aus einem Winkelversatz ergebende axiale Bewegung der beiden miteinander in Eingriff stehenden Flansche zueinander ausgenutzt (diese Bewegungsrichtung ist in den Fign. 5 und 6 mit "L" bezeichnet). Diese axiale Längendimension L ändert sich dabei im Verlauf einer Umdrehung der Wellen 10, 12 sinusförmig über deren Zeit.

In Fig. 5 ist ein Schallerzeuger 50 gezeigt, der als Teil des Flanschs 16 ausgebildet ist und eine durch axiale Bewegung der Flansche 16 und 18 relativ zueinander betätigbare Pumpe 52 aufweist, die die axiale Relativbewegung der Flansche 16, 18 zueinander in einen Luftstrom umsetzt, der mittels eines Luftschwingungserzeugers 54 in eine selbsterregte Schwingung versetzt wird, um ein Schallsignal entsprechend der axialen Relativbewegung der beiden Flansche 16 und 18 zueinander zu erzeugen. Der Luftschwingungserzeuger ist vorzugsweise als Pfeife ausgebildet, beispielsweise als Zungenpfeife, wobei der Luftstrom bei dem Schallerzeuger 50 in radialer Richtung erzeugt wird. Die Pumpe 52 kann beispielsweise nach Art einer Membranpumpe, einer Kolbenpumpe, einer Luftpumpe mit Ventilen oder eines Blasenbalgs ausgebildet sein und beispielsweise auch einen Luftdruckspeicher aufweisen.

Links unten in Fig. 5 ist ein anderes Beispiel für einen Schallerzeuger 60 gezeigt, welcher ebenfalls als Pfeife ausgebildet ist, beispielsweise als Lippenpfeife, Dampfpfeife oder Ringspaltpfeife, wobei auch hier der in Schwingung zu versetzende Luftstrom mittels einer axial betätigten Pumpe erzeugt werden kann.

Ein anderes Schallerzeugungsprinzip ist auf der rechten Seite der Fig. 5 gezeigt, wo beispielsweise der Flansch 22 mit einem Schallerzeuger 70 versehen ist, der ein Schwingungselement 72 aufweist, welches durch die axiale Relativbewegung zwischen den Flanschen 22 und 24 während des Wellenumlaufs in Schwingung versetzt wird, zumindest sofern der Winkelversatz einen bestimmten Wert überschreitet. Im rechts oben gezeigten Beispiel in Fig. 5 ist das Schwingungselement als Knackfrosch ausgebildet, der durch axiale Relativbewegung eines Anregungselements während des Wellenumlaufs betätigt wird. Dieses Anregungselement ist in Fig. 5 mit 74 bezeichnet.

Ferner ist in Fig. 5 rechts unten ein Beispiel für einen Schallerzeuger 80 gezeigt, der als Schwingungselement 82 beispielsweise eine Membran, eine Klatsche oder eine Pritsche aufweist, die von einem Anregungselement 84 in axialer Richtung angeregt werden.

Die Schallerzeuger 50 und 60 erzeugen Pfeiftöne, während die Schallerzeuger 70 und 80 aufgrund der nicht-linearen Anregung eher Knattertöne erzeugen. Das Anregungselement 74, 84 kann beispielweise als Stößel ausgebildet sein. Grundsätzlich können die Schallerzeuger 50, 60, 70, 80 von Fig. 5 so ausgebildet sein, dass die Schallerzeugung erst ab einem Mindesthub der axialen Relativbewegung der beiden betroffenen Flansche zueinander einsetzt.

Ein alternatives Schallerzeugungsprinzip ist in Fig. 6 gezeigt, wo der Flansch 24 mit einem Schallerzeuger 90 versehen ist, der einen Lautsprecher 92 sowie einen Wandler 94 aufweist, der eine axiale Relativbewegung zwischen den beiden Flanschen 22 und 24 in ein elektrisches Signal bzw. in elektrische Energie umwandelt, um ein Schallsignal mittels des Lautsprechers 92 zu erzeugen, das die axiale Relativbewegung der Flansche 22 und 24 zueinander wiedergibt. Mittels einer solchen Anordnung wird die mechanische Energie mittels des Wandlers 94 in elektrische Energie umgewandelt, wobei die elektrische Energie wiederum mittels des Lautsprechers 92 in akustische Energie umgewandelt werden kann.

Bei dem Wandler 94 handelt es sich vorzugsweise um einen piezoelektrischen Wandler.

Gemäß einer alternativen Ausgestaltung kann der Schallerzeuger 90 mit einer Auswertungseinrichtung 96 versehen sein, welches aus dem Wandlersignal den Winkelversatz ermittelt und beispielsweise mittels Sprachsynthese dem Lautsprecher 92 ein entsprechendes Klartextsignal zukommen lässt, beispielsweise in der Art "der Versatz beträgt 0,45 mm".

Statt eines Lautsprechers 92 kann eine Telemetrieeinrichtung 98 vorgesehen sein, welche die Signale des Wandlers 94 oder aus den Wandlersignalen abgeleitete Signale, welche den Fehlausrichtungszustand wiedergeben, drahtlos an eine stationäre Einheit (nicht gezeigt) zu übermittelt. Sofern die Telemetrieeinrichtung die Wandlersignale selbst übermittelt, ist die Auswertungseinrichtung nicht als Teil der Anordnung 90 ausgebildet, sondern als Teil der stationären Einheit, an welche die Wandlersignale drahtlos übermittelt werden.

Vorzugsweise ist bei der Ausführungsform von Fig. 6 auch ein Inklinometer 100 vorgesehen, das beispielsweise einen Teil der Anordnung 90 bildet und dazu vorgesehen ist, um die Fehlausrichtung des entsprechenden Flansches, in welchem es vorgesehen ist, bezüglich der Vertikalen zu bestimmen; ferner kann mittels des Inklinometers 100 die Drehzahl und die Drehphase der Drehbewegung der Wellen 10, 12 ermittelt werden, wenn das Inklinometersignal der Auswertungseinheit 98 zugeführt wird. Die Ermittlung der Drehphase ist insbesondere für die Auswertung des zeitlichen Verlaufs des Signals des Wandlers 94 von Interesse, da nur dann eine korrekte Aufteilung des Winkelversatzes auf eine vertikale Komponente und eine horizontale Komponente möglich ist.

Sofern die Drehzahl erfasst wird, kann die Warnung auch drehzahlabhängig ausgegeben werden, indem beispielsweise die Intensität der Warnung mit zunehmender Drehzahl abnimmt.

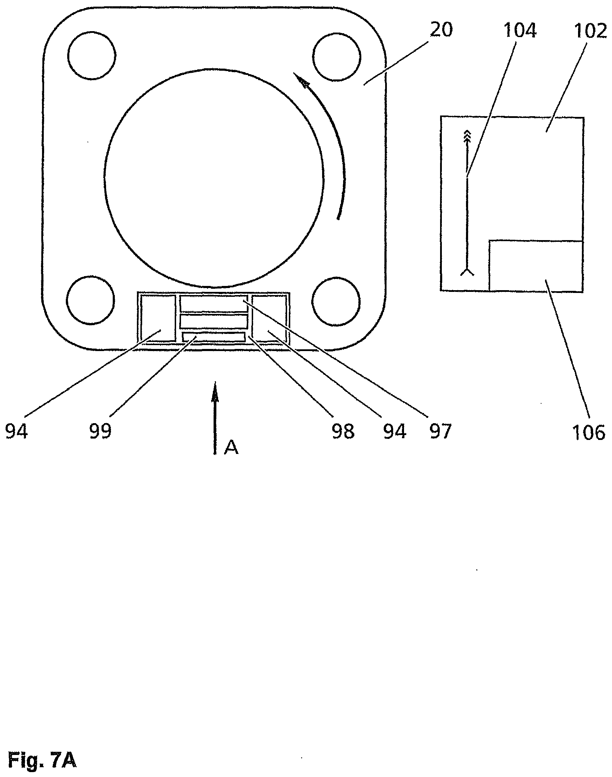

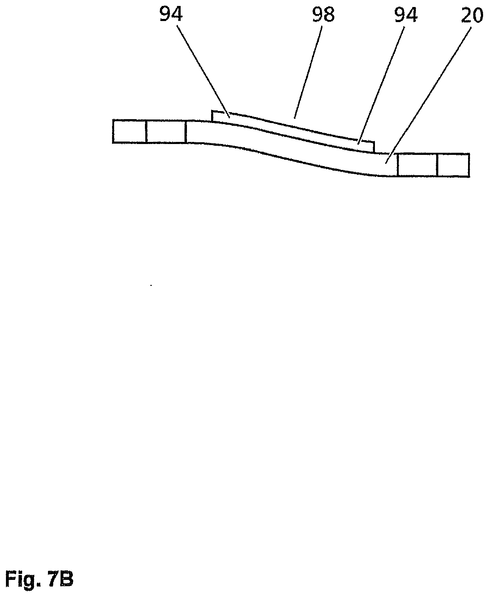

In Fig. 7A und 7B ist eine Abwandlung des Prinzips von Fig. 6 gezeigt, wobei eine Kupplungsmembran 20 mit Piezowandlern 94 und einer Telemetrieeinrichtung 98 mit einem Energiespeicher 97 und einer Antenne 99 versehen ist, um die sich aus einer Verbiegung der Kupplungsmembran - und damit der Piezowandler 94 - ergebende elektrische Energie drahtlos an eine stationäre Empfängereinheit 102 mit einer Auswertungseinrichtung 106 und einer Antenne 104 zu übermitteln. Dabei kann die Auswertungseinrichtung 106 ausgebildet sein, um aus der sich während eines Umlaufs der Kupplungsvorrichtung 13 ändernden Dämpfung zwischen der Antenne 99 der Telemetrieeinrichtung 98 und der Antenne 104 der stationären Empfängereinheit den momentanen Drehwinkel bzw. die Drehphase der Kupplungsvorrichtung 13 zu ermitteln. Auf diese Weise kann die Phasenlage des Wandlersignals ermittelt werden, um beispielsweise den Winkelversatz in seine beiden Komponenten (horizontal, vertikal) zu zerlegen. Ferner kann die Signalübermittlung so gesteuert werden, dass die Signalübermittlung im wesentlichen nur zu Zeitpunkten stattfindet, wo die beiden Antennen 99, 104 besonders günstig zueinander stehen.

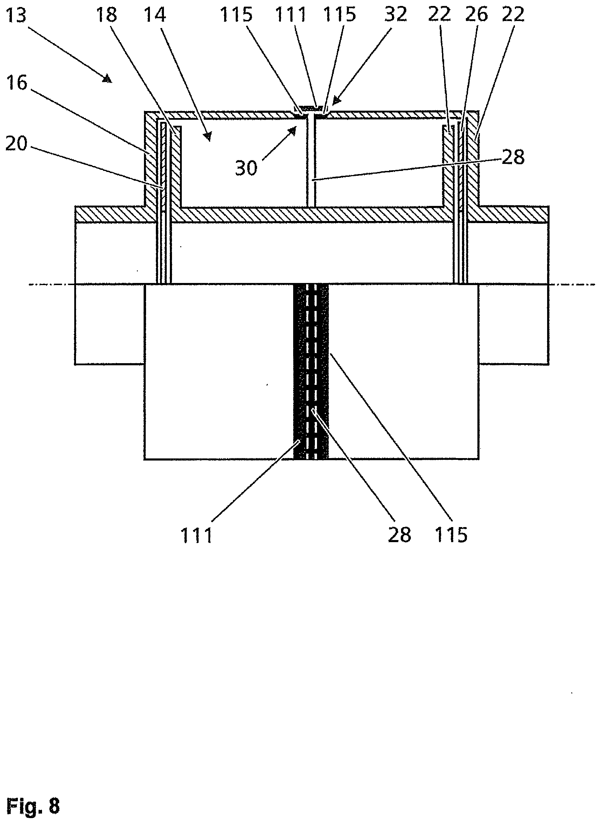

In Fig. 8 ist ein Beispiel einer Abwandlung des in Fig. 1 veranschaulichten Prinzips gezeigt, wobei im Bereich des Spalts 28 zwischen den glockenartigen Kupplungsflanschen 16, 22 ein umlaufender Ring 111 an den Rändern 30, 32 der den Spalt 28 bildenden Flansche 16, 22 angegebracht ist, der so ausgebildet ist, dass sich sein Zustand aufgrund der Beanspruchung bei sich bei der Drehung der Wellen 10, 12 aus einer unzuässigen Fehlausrichtung der Wellen ergebender axialer und/oder radialer Relativbewegung in beobachtbarer Weise verändert. Im Beispiel von Fig. 8 ist der Ring 111 aus sprödem Material gefertigt ist und verdeckt den Spalt 28 und die Ränder 30, 32 der Flansche 16, 22, solange die Fehlausrichtung der Wellen 10, 12 im zulässigen Bereich liegt. Dabei ist der Ring 111 so ausgebildet, dass er aufgrund der von der Fehlausrichtung verursachten Relativbewegung der Flansche 16, 22 mindestens teilweise abplatzt, wenn die Fehlausrichtung den zulässigen Bereich verlässt. Dabei ist der von dem Ring 111 verdeckte Bereich 115 der Ränder 30, 32 als optische Markierung ausgebildet und beispielsweise in anderen Farbe gehalten als der Ring 111. Im unteren Teil von Fig. 8 ist ein Beispiel gezeigt, wenn der Ring 111 schon teilweise abgeplatzt ist.

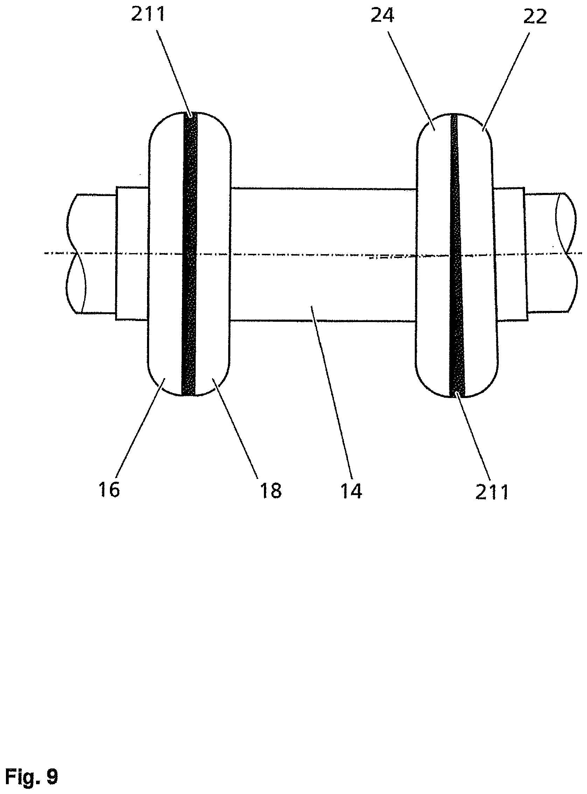

Ein alternatives Beispiel ist in Fig. 9 gezeigt, welches sich an das Prinzip von Fig. 4 anlehnt, wo alle vier Flansche 16, 18, 22, 24 glockenförmig ausgebildet sind. Im Beispiel von Fig. 9 ist der Ring 211 dabei aus plastischem Material gefertigt und ist so ausgebildet, dass er sich aufgrund der Beanspruchung bei sich bei der Drehung der Wellen aus einer unzulässigen Fehlausrichtung der Wellen ergebender axialer und/oder radialer Relativbewegung erwärmt. Wenn der Ring 211 aus thermochromem Material gefertigt ist, ändert sich die Farbe des Rings 211 aufgrund der Erwärmung, so eine unzulässige Fehlausrichtung anhand der Farbe des Rings 211 erkannt werden kann.

Alternativ kann die Temperatur des Rings 211 thermographisch überwacht werden.

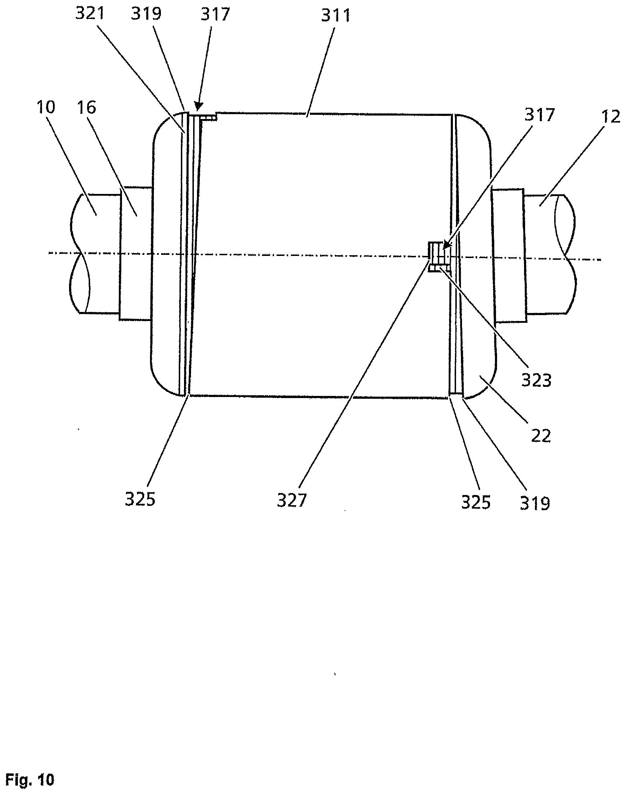

Ein weitere Variante mit einem umlaufenden Ring 311 im Randbereich 30, 32 der Kupplungsflansche 16, 22 der ist Fig. 10 gezeigt, wobei der Ring breit ausgebildet ist und bzgl. der Flansche 16, 22 bei einer Fehlausrichtung der Wellen axial verschiebbar und verkippbar ist. Die Flansche 16, 22 und der Ring 311 sind mit Markierungselementen versehenen, um die relative Position des Rings 311 optisch kenntlich zu machen. Im gezeigten Beispiel sind die Markierungselemente der Flansche als mindestens zum Teil umlaufende Ringe 317 bzw. als mindestens zum Teil umlaufende Kanten 319 ausgebildet, und die Markierungselemente des Rings werden von mindestens zum Teil umlaufenden Kanten 325 bzw. Durchbrechungskanten 327 gebildet. Die Markierungselemente der Flansche 16, 22 können auch einen Eichring 321 aufweisen. Die Markierungselemente des Rings 311 können auch mindestens eine sich in axialer Richtung erstreckende Skala 323 aufweisen, die mit den Ringen oder Strichen der Flansche zusammenwirken, beispielsweise um eine Noniusfunktion zu realisieren.

Die Markierungselement dienen dazu, das Erkennen oder Ablesen einer Fehlausrichtung der Wellen 10, 12 anhand der entsprechenden relativen Positionsverschiebung des Rings 311 bzgl. der Flansche 16, 22 zu ermöglichen.

Gemäß einer abwandelten Variante könnte der Ring gewissermaßen einen Teil eines der beiden Flansche 16, 22 bilden, so dass in diesem Fall die Randbereiche 30, 32 der Flansche 16, 22 in axialer Richtung mindestens teilweise überlappen. Die relative Verschiebung der Flansche 16, 22 aufgrund einer Fehlausrichtung der Wellen 10, 12 kann dann in ähnlicher Weise wie bei dem Beispiel von Fig. 10 anhand der Markierungselemente direkt erkannt bzw. abgelesen werden.

## Patentansprüche

1. Kupplungsvorrichtung zum Verbinden einer ersten Welle (10) mit einer zweiten Welle (12), mit zwei miteinander in Eingriff stehenden Flanschen (16, 18, 22, 24), wobei die Flansche mit Mitteln (30, 32, 111, 211, 311, 317, 319, 321) versehen bzw. ausgebildet sind, um ihre axiale und/oder radiale relative Verstellung aufgrund einer Fehlausrichtung der Wellen optisch beobachtbar zu machen, **dadurch gekennzeichnet, dass** die Flansche (16, 22) in einer Weise glockenförmig ausgebildet sind, dass ihre Randbereiche (30, 32) in axialer Richtung mindestens zum Teil überlappen und mit Markierungselementen (317, 319, 321, 325, 327) versehen sind, um ihre Position zueinander optisch kenntlich zu machen.

2. Vorrichtung gemäß Anspruch 1, **dadurch gekennzeichnet, dass** die Markierungselemente der Flansche mindestens zum Teil umlaufende Ringe (317), und/oder mindestens zum Teil umlaufende Kanten (319, 325) oder Durchbrechungskanten (327) aufweisen.

3. Kupplungsvorrichtung zum Verbinden einer ersten Welle (10) mit einer zweiten Welle (12), mit zwei miteinander in Eingriff stehenden Flanschen (16, 18, 22, 24), wobei die Flansche mit Mitteln (30, 32, 111, 211, 311, 317, 319, 321) versehen bzw. ausgebildet sind, um ihre axiale und/oder radiale relative Verstellung aufgrund einer Fehlausrichtung der Wellen optisch beobachtbar zu machen wobei die Flansche so glockenförmig ausgebildet sind, dass ein umlaufender axialer Spalt (28) zwischen den Flanschen gebildet wird, **dadurch gekennzeichnet, dass** im Bereich des Spalts ein umlaufender Ring (111, 211, 311) an den Rändern (30, 32) der den Spalt bildenden Flansche (16, 22) angebracht ist, der so ausgebildet, dass sich sein Zustand und/oder seine relative Position bzgl. der Flansche aufgrund der Beanspruchung bei sich bei der Drehung der Wellen aus einer unzulässigen Fehlausrichtung der Wellen ergebender Relativbewegung der den Spalt bildenden Flansche in optisch beobachtbarer Weise verändert, wobei der Ring (311) bzgl. der Flansche (16, 22) aufgrund einer Fehlausrichtung der Wellen (10, 12) axial verschiebbar bzw. verkippbar ist und die Flansche und der Ring mit Markierungselementen (317, 319, 321, 323, 325, 327) versehenen sind, um die Position des Rings optisch kenntlich zu machen, oder wobei der Ring (111, 211) aus sprödem Material gefertigt ist und den Spalt (28, 128, 129) und die Ränder (30, 32) der den Spalt bildenden Flansche (16, 18, 22, 24) verdeckt, solange die Fehlausrichtung der Wellen im zulässigen Bereich liegt, wobei der Ring ausgebildet ist, aufgrund der Beanspruchung bei sich bei der Drehung der Wellen (10, 12) aus einer unzulässigen Fehlausrichtung der Wellen ergebender Relativbewegung der Flansche mindestens teilweise abzuplatzen, oder der Ring (211) aus plastischem Material gefertigt ist, wobei sich der Ring aufgrund der Beanspruchung bei sich bei der Drehung der Wellen aus einer unzulässigen Fehlausrichtung der Wellen ergebender Relativbewegung der Flansche (16, 18, 22, 24) in thermographisch beobachtbarer Weise erwärmt.

4. Vorrichtung gemäß Anspruch 3, **dadurch gekennzeichnet, dass** die Markierungselemente der Flansche (16, 22) mindestens zum Teil umlaufende Ringe (317) und/oder Kanten (319) aufweisen, die als Durchbrechungskanten (327) und/oder mindestens zum Teil umlaufende Kanten (325) ausgebildet sind wobei die Markierungselemente (317, 323) der Flansche (16, 22) und des Rings (311) eine Noniusfunktion bilden, wobei die Markierungselemente der Flansche (16, 22) einen Eichring (321) aufweisen, und wobei die Markierungselemente des Rings (311) eine sich in axialer Richtung erstreckende Skala (323) aufweisen.

5. Vorrichtung gemäß Anspruch 3, **dadurch gekennzeichnet, dass** der von dem Ring (111) verdeckte Bereich (115) der Ränder (30, 32) der den Spalt bildenden Flansche (16, 22) als optische Markierung ausgebildet ist.

6. Vorrichtung gemäß Anspruch 3, **dadurch gekennzeichnet, dass** der Ring (211) aus thermochromem Material gefertigt ist, so dass sich die Farbe des Rings aufgrund der Erwärmung ändert.

7. Kupplungsvorrichtung zum Verbinden einer ersten Welle (10) mit einer zweiten Welle (12), mit zwei miteinander in Eingriff stehenden Flanschen (16, 18, 22, 24), **dadurch gekennzeichnet, dass** mindestens einer der Flansche oder ein mit den zwei Flansche in Eingriff stehendes Element (20, 26) mit mindestens einem Wandler (50, 60, 70, 80, 90; 94) zum Erzeugen eines elektrischen Signals und/oder akustischen Signals aus mechanischer Bewegung versehen ist, wobei der Wandler ausgebildet ist, das Signal aufgrund einer periodischen Bewegung der Flansche relativ zueinander zu erzeugen, zumindest wenn die sich bei der Drehung der Wellen aus einer Fehlausrichtung der Wellen ergebende Relativbewegung der beiden Flansche zueinander einen bestimmten Wert überschreitet

8. Vorrichtung gemäß Anspruch 7, **dadurch gekennzeichnet, dass** der Wandler als piezoelektrischer Wandler (94) ausgebildet ist wobei der mit dem Wandler (94) versehene Flansch (24) bzw. das mit dem Wandler (94) versehene Element (20, 26) eine Telemetrieeinrichtung (98) aufweist, um die Wandlersignale oder aus den Wandlersignalen abgeleitete Signale drahtlos an eine stationäre Einheit zu übermitteln, wobei eine Auswertungseinrichtung (96) vorgesehen ist, die ausgebildet ist, um durch Auswertung der Wandlersignale den Winkelversatz der beiden Wellen (10, 12) zueinander zu ermitteln und einen Teil der Telemetrieeinrichtung (98) oder einen Teil der stationären Einheit bildet oder die Auswertungseinrichtung ausgebildet ist, um aus der sich während eines Umlaufs der Kupplungsvorrichtung ändernden Dämpfung zwischen der Antenne der Telemetrieeinrichtung und der Antenne der stationären Einheit den momentanen Drehwinkel der Kupplungsvorrichtung zu ermitteln, wobei die Vorrichtung einen Lautsprecher (92) aufweist, um entsprechend dem Wandlersignal ein Schallsignal abzugeben, wenn die sich bei der Drehung der Wellen (10, 12) aus einer Fehlausrichtung der Wellen ergebende axiale und/oder radiale Relativbewegung der beiden Flansche (22, 24) zueinander einen bestimmten Wert überschreitet.

9. Vorrichtung gemäß Anspruch 7, **dadurch gekennzeichnet, dass** mindestens einer der Flansche (16, 22) Mittel (50, 60, 70, 80, 90) zur Schallerzeugung aufweist, wobei der andere Flansch mit mindestens einem Anregungselement (34, 36, 74, 84, 136, 236) versehen ist, um den Wandler zu bilden, wobei das Anregungselement ausgebildet ist, um die Schallerzeugungsmittel durch periodische axiale und/oder radiale Bewegung zur Schalleerzeugung zu aktivieren, wenn die sich bei der Drehung der Wellen aus einer Fehlausrichtung der Wellen ergebende Relativbewegung der beiden Flansche zueinander einen bestimmten Wert überschreitet.

10. Vorrichtung gemäß Anspruch 9, **dadurch gekennzeichnet, dass** die Schallerzeugungsmittel von einer glockenförmigen Ausbildung des betreffenden Flansches (16, 18, 22, 24) gebildet werden, , und wobei das Anregungselement (34, 36, 136, 236) ausgebildet ist, um den glockenförmigen Flansch durch periodische Berührung zu akustischen Schwingungen anzuregen, wenn die sich bei der Drehung der Wellen (10, 12) aus einer Fehlausrichtung der Wellen ergebende Relativbewegung der beiden Flansche zueinander einen bestimmten Wert überschreitet.

11. Vorrichtung gemäß Anspruch 10, **dadurch gekennzeichnet, dass** das Anregungselement (34) bzw. mindestens eines der Anregungselemente ausgebildet ist, um den glockenförmig ausgebildeten Flansch (16) durch radiale Bewegung relativ zu dem glockenförmig ausgebildeten Flansch anzuregen, wenn die sich bei der Drehung der Wellen (10, 12) aus einem Parallelversatz der Wellen ergebende radiale Relativbewegung der Flansche zueinander einen bestimmten Wert überschreitet, oder wobei das Anregungselement (36, 136, 236) bzw. mindestens eines der Anregungselemente ausgebildet ist, um den glockenförmig ausgebildeten Flansch (16, 22) durch axiale Bewegung relativ zu dem glockenförmig ausgebildeten Flansch anzuregen, wenn die sich bei der Drehung der Wellen (10, 12) aus einem Parallelversatz der Wellen ergebende axiale Relativbewegung der Flansche (16, 18, 22, 24) zueinander einen bestimmten Wert überschreitet.

12. Vorrichtung gemäß Anspruch 9, **dadurch gekennzeichnet, dass** die Schallerzeugungsmittel (50, 60) eine durch axiale Bewegung des Anregungselements relativ zu dem Schallerzeugungsmittel betätigbare Pumpe (52) sowie einen Luftschwingungserzeuger (54) aufweisen, um eine radiale Bewegung des Anregungselements relativ zu dem Schallerzeugungsmittel in einen Luftstrom umzusetzen, der mittels des Luftschwingungserzeugers in selbsterregte Schwingung versetzt wird, um ein Schallsignal zu erzeugen, wenn die sich bei der Drehung der Wellen (10, 12) aus einem Winkelversatz der Wellen ergebende axiale Relativbewegung der Flansche (16, 18) zueinander einen bestimmten Wert überschreitet, wobei die Schallerzeugungsmittel (50, 60) eine Pfeife (54) aufweisen.

13. Vorrichtung gemäß Anspruch 9, **dadurch gekennzeichnet, dass** die Schallerzeugungsmittel (70, 80) ein Schwingungselement (72, 82) aufweisen, welches durch axiale Bewegung des Anregungselements (74, 84) relativ zu dem Schallerzeugungsmittel zu Schwingungen anregbar ist, um ein Schallsignal zu erzeugen, wenn die sich bei der Drehung der Wellen (10, 12) aus einem Winkelversatz der Wellen ergebende axiale Relativbewegung der Flansche zueinander einen bestimmten Wert überschreitet, wobei das Schwingungselement eine Membran (72) aufweist und wobei das Anregungselement als Stößel (74, 84) ausgebildet ist.

14. Vorrichtung gemäß einem der Ansprüche 9 bis 13, **dadurch gekennzeichnet, dass** die Vorrichtung ein Mikrofon (40) zum Auffangen von von den Schallerzeugungsmitteln (50, 60, 70, 80, 90) bzw. einem der Flansche (16, 18, 22, 24) erzeugtem Luftschall aufweist.

15. Vorrichtung gemäß einem der vorhergehenden Ansprüche, **dadurch gekennzeichnet, dass** mindestens einer der Flansche (24) mit mindestens einem Inklinometer (100) versehen ist, welches ausgebildet und angeordnet ist, um die Fehlausrichtung des mit dem Inklinometer versehenen Flanschs (18) bzgl. der Vertikalen zu bestimmen, wobei eine Auswertungseinrichtung (98) vorgesehen ist, um aus dem Inklinometersignal die Drehzahl und die Drehphase zu ermitteln.

## Claims

1. Clutch device for connecting a first shaft (10) to a second shaft (12), with two flanges (16, 18, 22, 24), which are in engagement with one another, wherein the flanges are provided or embodied with means (30, 32, 111, 211, 311, 317, 319, 321) in order to make it possible to visually observe their axial and/or radial relative misalignment owing to an incorrect orientation of the shafts, **characterized in that** the flanges (16, 22) are embodied in a bell shape in such a way that their edge regions (30, 32) overlap at least partially in the axial direction and are provided with marking elements (317, 319, 321, 325, 327) in order to make their position with respect to one another visually apparent.

2. Device according to Claim 1, **characterized in that** the marking elements of the flanges have rings (317) which run at least partially around and/or edges (319, 325) which run at least partially around or break-through edges (327).

3. Clutch device for connecting a first shaft (10) to a second shaft (12), with two flanges (16, 18, 22, 24) which are in engagement with one another, wherein the flanges are provided or embodied with means (30, 32, 111, 211, 311, 317, 319, 321) in order to make it possible to visually observe their axial and/or radial relative misalignment owing to an incorrect orientation of the shafts, wherein the flanges are embodied in a bell shape in such a way that an axial gap (28) which runs around is formed between the flanges, **characterized in that** a ring (111, 211, 311) which runs around in the region of the gap is attached to the edges (30, 32) of the flanges (16, 22) which form the gap, which ring (111, 211, 311) is embodied in such a way that its state and/or its relative position with respect to the flanges changes in a visually observable fashion owing to the loading in the case of a relative movement of the flanges forming the gap, which occurs when the shafts rotate out of an unacceptable incorrect orientation of the shafts, wherein the ring (311) or the flanges (16, 22) can be shifted or tilted axially owing to an incorrect orientation of the shafts (10, 12), and the flanges and the ring are provided with marking elements (317, 319, 321, 323, 325, 327) in order to make the position of the ring visually apparent, or wherein the ring (111, 211) is fabricated from brittle material and conceals the gap (28, 128, 129) and the edges (30, 32) of the flanges (16, 18, 22, 24) which form the gap, as long as the incorrect orientation of the shafts is in the permissible range, wherein the ring is designed to become at least partially detached owing to the loading in the case of a relative movement of the flanges, which occurs when the shafts (10, 12) rotate out of an unacceptable incorrect orientation of the shafts, or the ring (211) is fabricated from a plastic material, wherein the ring heats up in a thermographically observable fashion owing to the loading in the case of a relative movement of the flanges (16, 18, 22, 24) which occurs when the shafts rotate out of an unacceptable incorrect orientation of the shafts.

4. Device according to Claim 3, **characterized in that** the marking elements of the flanges (16, 22) have rings (317) and/or edges (319) which run at least partially around and are embodied as break-through edges (327) and/or as edges (325) which run at least partially around, wherein the marking elements (317, 323) of the flanges (16, 22) and of the ring (311) form a Vernier scale function, wherein the marking elements of the flanges (16, 22) have a calibration ring (321), and wherein the marking elements of the ring (311) have a scale (323) which extends in the axial direction.

5. Device according to Claim 3, **characterized in that** the region (115), concealed by the ring (111), of the edges (30, 32) of the flanges (16, 22) forming the gap is embodied as a visual marking.

6. Device according to Claim 3, **characterized in that** the ring (211) is fabricated from thermochromic material, so that the colour of the ring changes owing to the heating.

7. Clutch device for connecting a first shaft (10) to a second shaft (12), with two flanges (16, 18, 22, 24) which are in engagement with one another, **characterized in that** at least one of the flanges or an element (20, 26) which is in engagement with the two flanges is provided with at least one transducer (50, 60, 70, 80, 90; 94) for generating an electrical signal and/or acoustic signal from a mechanical movement, wherein the transducer is designed to generate the signal owing to a periodic movement of the flanges in relation to one another, at least when the relative movement of the two flanges with respect to one another, which occurs when the shafts rotate out of an incorrect orientation of the shafts, exceeds a specific value.

8. Device according to Claim 7, **characterized in that** the transducer is embodied as a piezo-electric transducer (94), wherein the flange (24) which is provided with the transducer (94) or the element (20, 26) which is provided with the transducer (94) has a telemetry device (98) in order to transmit the transducer signals, or signals derived from the transducer signals, to a stationary unit in a wireless fashion, wherein an evaluation device (96) is provided which is designed to determine, through evaluation of the transducer signals, the angular offset of the two shafts (10, 12) with respect to one another, and forms part of the telemetry device (98) or part of the stationary unit, or the evaluation device is designed to determine the instantaneous rotation angle of the clutch device from the damping, which changes during a circulation of the clutch device, between the antenna of the telemetry device and the antenna of the stationary unit, wherein the device has a loudspeaker (92) in order to output a sound signal in accordance with the transducer signal when the axial and/or radial relative movement of the two flanges (22, 24) with respect to one another, which occurs when the shafts (10, 12) rotate out of an incorrect orientation of the shafts, exceeds a specific value.

9. Device according to Claim 7, **characterized in that** at least one of the flanges (16, 22) has means (50, 60, 70, 80, 90) for generating sound, wherein the other flange is provided with at least one excitation element (34, 36, 74, 84, 136, 236) in order to form the transducer, wherein the excitation element is designed to activate the sound-generating means by means of periodic axial and/or radial movement for the generation of sound when the relative movement of the two flanges with respect to one another, which occurs when the shafts rotate out of an incorrect orientation of the shafts, exceeds a specific value.

10. Device according to Claim 9, **characterized in that** the sound-generating means are formed by a bell-shaped embodiment of the respective flange (16, 18, 22, 24), and wherein the excitation element (34, 36, 136, 236) is designed to excite, by means of periodic contact, the bell-shaped flange to experience acoustic oscillation when the relative movement of the two flanges with respect to one another, which occurs when the shafts (10, 12) rotate out of an incorrect orientation of the shafts, exceeds a specific value.

11. Device according to Claim 10, **characterized in that** the excitation element (34) or at least one of the excitation elements is designed to excite the flange (16), embodied in a bell shape, by means of radial movement in relation to the flange which is embodied in a bell shape, when the radial relative movement of the flanges with respect to one another, which occurs when the shafts (10, 12) rotate out of a parallel offset of the shafts, exceeds a specific value, or wherein the excitation element (36, 136, 236) or at least one of the excitation elements is designed to excite the flange (16, 22), embodied in a bell shape, by means of axial movement in relation to the flange which is embodied in a bell shape, when the axial relative movement of the flanges (16, 18, 22, 24) with respect to one another, which occurs when the shafts (10, 12) rotate out of a parallel offset of the shafts, exceeds a specific value.

12. Device according to Claim 9, **characterized in that** the sound-generating means (50, 60) have a pump (52) which can be activated by axial movement of the excitation element in relation to the sound-generating means and an air oscillation generator (54) in order to convert a radial movement of the excitation element in relation to the sound-generating means into an air flow which is made to experience self-excited oscillation by means of the air oscillation generator in order to generate a sound signal when the axial relative movement of the flanges (16, 18) with respect to one another, which occurs when the shafts (10, 12) rotate out of an angular offset of the shafts, exceeds a specific value, wherein the sound-generating means (50, 60) have a whistle (54).

13. Device according to Claim 9, **characterized in that** the sound-generating means (70, 80) have an oscillation element (72, 82) which can be excited to oscillate by means of axial movement of the excitation element (74, 84) in relation to the sound-generating means, in order to generate a sound signal when the axial relative movement of the flanges with respect to one another, which occurs when the shafts (10, 12) rotate out of an angular offset of the shafts, exceeds a specific value, wherein the oscillation element has a diaphragm (72), and wherein the excitation element is embodied as a plunger (74, 84).

14. Device according to one of Claims 9 to 13, **characterized in that** the device has a microphone (40) for capturing air-borne sound which is generated by the sound-generating means (50, 60, 70, 80, 90) or one of the flanges (16, 18, 22, 24).

15. Device according to one of the preceding claims, **characterized in that** at least one of the flanges (24) is provided with at least one inclinometer (100) which is designed and arranged in order to determine the incorrect orientation of the flange (18), provided with the inclinometer, with respect to the vertical, wherein an evaluation device (98) is provided in order to determine the rotational speed and the rotational phase from the inclinometer signal.

## Revendications

1. Dispositif d'accouplement destiné à relier un premier arbre (10) à un deuxième arbre (12), comportant deux brides (16, 18, 22, 24) en prise l'une avec l'autre, dans lequel les brides sont munies ou réalisées avec des moyens (30, 32, 111, 211, 311, 317, 319, 321) destinés à rendre optiquement observable leur déplacement relatif axial et/ou radial dû à un désalignement des arbres, **caractérisé en ce que** les brides (16, 22) sont réalisées en forme de cloche de manière à ce que leurs zones de bord (30, 32) se chevauchent au moins partiellement dans la direction axiale, et sont **en ce qu'**elles sont pourvues d'éléments de marquage (317, 319, 321, 325, 327) destinés à rendre optiquement perceptible leur position l'une par rapport à l'autre.

2. Dispositif selon la revendication 1, **caractérisé en ce que** les éléments de marquage des brides comportent des anneaux (317) au moins partiellement circonférentiels et/ou des bords (319, 325) ou des bords entaillés (327) au moins partiellement circonférentiels.

3. Dispositif d'accouplement destiné à relier un premier arbre (10) à un deuxième arbre (12), comportant deux brides (16, 18, 22, 24) en prise l'une avec l'autre, dans lequel les brides sont munies ou réalisées avec des moyens (30, 32, 111, 211, 311, 317, 319, 321) destinés à rendre optiquement observable leur déplacement relatif axial et/ou radial dû à un désalignement des arbres, dans lequel les brides sont réalisées en forme de cloche de manière à créer un interstice axial circonférentiel (28) entre les brides,
**caractérisé en ce que**, dans la région de l'interstice, un anneau circonférentiel (111, 211, 311) est fixé aux bords (30, 32) des brides (16, 22) formant l'interstice, lequel anneau est conçu de manière à ce que son état et/ou sa position par rapport aux brides se modifient de manière optiquement observable du fait de la sollicitation exercée lors du mouvement relatif des brides formant l'interstice, qui résulte d'un désalignement non admissible des arbres lors de la rotation des arbres, dans lequel l'anneau (311) peut être déplacé ou basculé axialement par rapport aux brides (16, 22) en raison d'un désalignement des arbres (10, 12) et les brides et l'anneau sont munis d'éléments de marquage (317, 319, 321, 323, 325, 327) destinés à rendre optiquement perceptible la position de l'anneau, ou dans lequel l'anneau (111, 211) est constitué d'un matériau fragile et recouvre l'interstice (28, 128, 129) et les bords (30, 32) des brides (16, 18, 22, 24) formant l'interstice tant que le désalignement des arbres se situe dans la plage admissible, dans lequel l'anneau est réalisé de manière à s'écailler au moins partiellement du fait de la contrainte exercée lors du mouvement relatif des brides, qui résulte d'un désalignement non admissible des arbres lors de la rotation des arbres (10, 12), ou bien l'anneau (211) est constitué de matière synthétique, dans lequel l'anneau chauffe d'une manière thermographiquement observable du fait de la sollicitation exercée lors du mouvement relatif des brides (16, 18, 22, 24), qui résulte d'un désalignement non admissible des arbres lors de la rotation des arbres.

4. Dispositif selon la revendication 3, **caractérisé en ce que** les éléments de marquage des brides (16, 22) comportent des anneaux (317) et/ou des bords (319) au moins partiellement circonférentiels qui sont réalisés sous forme de bords entaillés (327) et/ou de bords (325) au moins partiellement circonférentiels, dans lequel les éléments de marquage (317, 323) des brides (16, 22) et de l'anneau (311) forment une fonction vernier, dans lequel les éléments de marquage des brides (16, 22) comportent un anneau d'étalonnage (321), et dans lequel les éléments de marquage de l'anneau (311) comportent une échelle s'étendant dans la direction axiale (323).

5. Dispositif selon la revendication 3, **caractérisé en ce que** la zone (115) des bords (30, 32) des brides (16, 22) formant l'interstice qui est recouverte par l'anneau (111) est réalisée sous la forme d'un marquage optique.

6. Dispositif selon la revendication 3, **caractérisé en ce que** l'anneau (211) est constitué d'un matériau thermochrome de manière à ce que la couleur de l'anneau se modifie sous l'effet de la chaleur.

7. Dispositif d'accouplement destiné à relier un premier arbre (10) à un deuxième arbre (12), comportant deux brides (16, 18, 22, 24) en prise l'une avec l'autre, **caractérisé en ce qu'**au moins l'une des brides ou un élément (20, 26) en prise avec les deux brides est muni d'au moins un transducteur (50, 60, 70, 80, 90 ; 94) destiné à générer un signal électrique et/ou un signal acoustique à partir du mouvement mécanique, dans lequel le transducteur est conçu pour générer le signal sous l'effet d'un mouvement périodique des brides l'une par rapport à l'autre, au moins lorsque le mouvement relatif des deux brides l'une par rapport à l'autre, qui résulte d'un désalignement des arbres lors de la rotation des arbres, dépasse une valeur déterminée.

8. Dispositif selon la revendication 7, **caractérisé en ce que** le transducteur est réalisé sous la forme d'un transducteur piézoélectrique (94), dans lequel la bride (24) munie du transducteur (94) ou l'élément (20, 26) muni du transducteur (94) comporte un dispositif de télémétrie (98) destiné à transmettre sans fil à une unité stationnaire les signaux du transducteur ou des signaux issus des signaux du transducteur, dans lequel il est prévu un dispositif d'évaluation (96) qui est conçu pour déterminer le décalage angulaire des deux arbres (10, 12) l'un par rapport à l'autre en évaluant les signaux du transducteur et qui fait partie du dispositif de télémétrie (98) ou de l'unité stationnaire, ou le dispositif d'évaluation est conçu pour déterminer l'angle de rotation instantané du dispositif d'accouplement à partir de l'atténuation qui varie pendant une rotation du dispositif d'accouplement et qui se produit entre l'antenne du dispositif de télémétrie et l'antenne de l'unité stationnaire, dans lequel le dispositif comporte un haut-parleur (92) destiné à émettre un signal sonore correspondant au signal du transducteur lorsque le mouvement relatif axial et/ou radial des deux brides (22, 24) l'une par rapport à l'autre, qui résulte d'un désalignement des arbres lors de la rotation des arbres (10, 12), dépasse une valeur déterminée.

9. Dispositif selon la revendication 7, **caractérisé en ce qu'**au moins l'une des brides (16, 22) comporte des moyens (50, 60, 70, 80, 90) générateurs de sons, dans lequel l'autre bride est munie d'au moins un élément d'excitation (34, 36, 74, 84, 136, 236) destiné à former le transducteur, dans lequel l'élément d'excitation est conçu pour activer les moyens générateurs de son par mouvement périodique axial et/ou radial lorsque le mouvement relatif des deux brides, qui résulte d'un désalignement des arbres lors de la rotation des arbres, dépasse une valeur déterminée.

10. Dispositif selon la revendication 9, **caractérisé en ce que** les moyens générateurs de sons sont formés par une structure en forme de cloche de la bride concernée (16, 18, 22, 24), et dans lequel l'élément d'excitation (34, 36, 136, 236) est conçu pour exciter en vibrations acoustiques la bride en forme de cloche par une sollicitation périodique lorsque le mouvement relatif des deux brides, qui résulte d'un désalignement des arbres lors de la rotation des arbres (10, 12), dépasse une valeur prédéterminée.

11. Dispositif selon la revendication 10, **caractérisé en ce que** l'élément d'excitation (34) ou au moins l'un des éléments d'excitation est conçu pour exciter la bride en forme de cloche (16) par mouvement radial par rapport à la bride en forme de cloche lorsque le mouvement radial relatif des brides l'une par rapport à l'autre, qui résulte d'un décalage parallèle des arbres lors de la rotation des arbres (10, 12), dépasse une valeur déterminée, ou dans lequel l'élément d'excitation (36, 136, 236) ou au moins l'un des éléments d'excitation est conçu pour exciter la bride en forme de cloche (16, 22) par mouvement axial par rapport à la bride en forme de cloche lorsque le mouvement axial relatif des brides (16, 18, 22, 24) l'une par rapport à l'autre, qui résulte d'un décalage parallèle des arbres lors de la rotation des arbres (10, 12), dépasse une valeur déterminée.

12. Dispositif selon la revendication 9, **caractérisé en ce que** les moyens générateurs de sons (50, 60) comportent une pompe (52) pouvant être actionnée par mouvement axial de l'élément d'excitation par rapport au moyen générateur de sons et un générateur de vibrations aériennes (54) destiné à convertir un mouvement radial de l'élément d'excitation par rapport au moyen générateur de sons en un flux d'air qui est mis en vibration autoentretenue par le générateur de vibrations aériennes afin de générer un signal sonore, lorsque le mouvement axial relatif des brides (16, 18) l'une par rapport à l'autre, qui résulte d'un décalage angulaire des arbres lors de la rotation des arbres (10, 12), dépasse une valeur déterminée, dans lequel les moyens générateurs de sons (50, 60) comportent un sifflet (54).

13. Dispositif selon la revendication 9, **caractérisé en ce que** les moyens générateurs de sons (70, 80) comprennent un élément vibrant (72, 82) qui peut être excité en vibration par mouvement axial de l'élément d'excitation (74, 84) par rapport aux moyens générateurs de sons afin de générer un signal sonore, lorsque le mouvement axial relatif des brides l'une par rapport à l'autre, qui résulte d'un décalage angulaire des arbres lors de la rotation des arbres (10, 12), dépasse une valeur déterminée, dans lequel l'élément vibrant comporte une membrane (72) et dans lequel l'élément d'excitation est réalisé sous la forme d'un poussoir (74, 84).

14. Dispositif selon l'une des revendications 9 à 13, **caractérisé en ce que** le dispositif comporte un microphone (40) destiné à capter des sons aériens générés par les moyens générateurs de sons (50, 60, 70, 80, 90) ou par l'une des brides (16, 18, 22, 24).

15. Dispositif selon l'une des revendications précédentes, **caractérisé en ce qu'**au moins l'une des brides (24) est munie d'au moins un inclinomètre (100) qui est réalisé et disposé de manière à déterminer le désalignement de la bride (18) munie de l'inclinomètre par rapport à la verticale, dans lequel il est prévu un dispositif d'évaluation (98) destiné à déterminer la vitesse de rotation et la phase de rotation à partir du signal de l'inclinomètre.
